# EUROPEAN PATENT APPLICATION

(11) **EP 2 395 589 A1**
(43) Date of publication of application: **14.12.2011**
(21) Application number: 11167742.3
(22) Date of filing: 26.05.2011
(51) Int. Cl.: H01M 10/0525, H01M 4/485, H01M 4/505, H01M 4/525, H01M 4/131, H01M 4/1391, C01G 45/00, C01G 53/00, H01M 10/0587

(54) **Positive active material precursor for secondary lithium battery, the positive active material, and secondary lithium battery including the positive active material**

(30) Priority: 13.06.2010 KR 20100055746
(71) Applicant: Samsung SDI Co., Ltd., Yongin-si, Gyeonggi-do (KR)
(72) Inventor: Kim, Min-Han, Gyeonggi-do (KR); Park, Do-Hyung, Gyeonggi-do (KR); Kwon, Seon-Young, Gyeonggi-do (KR); Song, Yu-Mi, Gyeonggi-do (KR); Kim, Ji-Hyun, Gyeonggi-do (KR); Kim, Kyoung-Hyun, Gyeonggi-do (KR)
(74) Representative: Sampson, Eimear

(57) **Abstract**

A positive active material precursor for a secondary lithium battery, which is represented by the following Chemical Formula 1 and has an intensity ratio of I₁₀₀/I₀₀₁ of more than or equal to about 2 of the peak I₁₀₀ of a (001) plane peak to the peak I₀₀₁ of a (100) plane peak according to X-ray diffraction analysis, a W₁₀₀/W₀₀₁ ratio of less than about 2 of the full width at half maximum W₁₀₀ of a (100) plane peak to the full width at half maximum W₀₀₁ of a (001) plane peak according to X-ray diffraction analysis, and an S₁₀₀/S₀₀₁ ratio of less than or equal to about 0.265 of the area S₀₀₁ of a (001) plane peak and the area S₁₀₀ of a (100) plane peak according to X-ray diffraction analysis. [Chemical Formula 1]
NiₓCo_{y}Mn_{z}Mₖ (OH)₂ wherein, M is a metal selected from Al, Mg, Ti, Zr or a combination thereof, 0.45≤x≤0.65, 0.15≤y≤0.25, 0.15≤z≤0.35, 0≤k≤0.1, and x+v+z+k=1.

## Description

The present invention relates to a positive active material precursor for a secondary lithium battery, a positive active material using the same, and a secondary lithium battery including the positive active material.

Due to reductions in size and weight of portable electronic equipment, there has been a need to develop batteries for portable electronic equipment that have both high performance and large capacity.

Batteries generate electrical power using an electrochemical reaction material for a positive electrode and a negative electrode. Secondary lithium batteries generate electrical energy from changes of chemical potential, when lithium ions are intercalated/deintercalated at the positive and negative electrodes.

The secondary lithium batteries include materials that reversibly intercalate or deintercalate lithium ions during charge and discharge reactions as both positive and negative active materials, and an organic electrolyte or a polymer electrolyte between the positive and negative electrodes.

For the positive active material for a secondary lithium battery, composite metal oxides such as LiCoO₂, LiMn₂O₄, LiNiO₂, LiNi₁₋ₓCoₓO₂ (0<x<1), LiMnO₂, have been researched.

Manganese-based positive active materials such as LiMn₂O₄ and LMnO₂ are easy to synthesize, cost less than other materials, have excellent thermal stability compared to other active materials, and are environmentally friendly. However, these manganese-based materials have relatively low capacity.

LiCoO₂ has good electrical conductivity, a high cell voltage of about 3.7V, and excellent cycle-life, stability, and discharge capacity, and thus is a presently-commercialized representative material. However, LiCoO₂ is so expensive that it makes up more than 30% of the cost of a battery, and thus may lose price competitiveness.

In addition, LiNiO₂ has a high discharge capacity but is hard to synthesize. Furthermore, since nickel is highly oxidized, it may deteriorate the cycle-life of a battery and an electrode, and may have a problem of severe self discharge and reversibility deterioration. Further, it may be difficult to commercialize due to incomplete stability.

According to a first aspect of the present invention there is provided a positive active material precursor for a secondary lithium battery, which is represented by the following Chemical Formula 1 and has an intensity ratio I₁₀₀/I₀₀₁ of more than or equal to about 0.2 of the height I₁₀₀ of a (100) plane peak to the height I₀₀₁ of a (001) plane peak according to X-ray diffraction analysis, a W₁₀₀/W₀₀₁ ratio of less than about 2 of a full width at half maximum W₁₀₀ of a (100) plane peak to a full width at half maximum W₀₀₁ of a (001) plane peak according to X-ray diffraction analysis, and an S₁₀₀/S₀₀₁ ratio of less than or equal to about 0.265 of the area S₁₀₀ of a (100) plane peak to the area S₀₀₁ of a (001) plane peak according to X-ray diffraction analysis.

NiₓCo_{y}Mn_{z}Mₖ(OH)₂ [Chemical Formula 1]

In Chemical Formula 1, M is a metal, 0.45≤x≤0.65, 0.15≤y≤0.25, 0.15≤z≤0.35, 0≤k≤0.1, and x+y+z+k=1.

The positive active material precursor may have an intensity ratio I₁₀₀/I₀₀₁ from about 0.2 to 0.6 of the height I₁₀₀ of a (100) plane peak to the height I₀₀₁ of a (001) plane peak according to X-ray diffraction analysis, a W₁₀₀/W₀₀₁ ratio of less than 1 or from about 0.12 to 0.8 of the full width at half maximum W₁₀₀ of a (100) plane peak to the full width at half maximum W₀₀₁ of a (001) plane peak according to X-ray diffraction analysis, and an S₁₀₀/S₀₀₁ ratio from about 0.235 to 0.260 of the area S₁₀₀ of a (100) plane peak to the area S₀₀₁ of a (001) plane peak according to X-ray diffraction analysis.

The positive active material precursor may have an intensity ratio I₍₀₀₂, ₁₀₁₎/I₀₀₁ of more than or equal to about 0.4 of a (002) plane peak or a (101) plane peak to a (001) plane peak according to X-ray diffraction analysis, and a W₍₀₀₂, ₁₀₁₎/W₀₀₁ ratio of less than or equal to about 2.5 of the full width at half maximum of a (002) plane peak or a (101) plane peak to the full width at half maximum of a (001) plane peak according to X-ray diffraction analysis.

The positive active material precursor may have an intensity ratio I_{(002, 101)}/I₀₀₁ from about 0.45 to about 0.6 of a (002) plane peak or a (101) plane peak to a (001) plane peak according to X-ray diffraction analysis, and a W_{(002, 101)}/W₀₀₁ ratio from about 1 to about 2.3 of the full width at half maximum of a (002) plane peak or a (101) plane peak to the full width at half maximum of a (001) plane peak according to X-ray diffraction analysis.

According to the X-ray diffraction analysis, it may have an S_{(002,101)}/S₀₀₁ ratio of more than or equal to 0.95 of the area S_{(002,101)} of a (002) plane peak or a (101) plane peak to the area S₀₀₁ of a (001) plane peak. It may have an S_{(002,101)}/S₀₀₁ ratio from about 0.95 to about 1.072 of the area S_{(002,101)} of a (002) plane peak or a (101) plane peak to the area S₀₀₁ of a a (001) plane peak.

The positive active material precursor may have a single phase.

In an embodiment, in Chemical Formula 1, 0.55≤x≤0.65, 0.15≤y≤0.25, 0.15≤z≤0.25, 0≤k≤0.1, and x+v+z+k=1. y and z may be the same. x may be 0.6, and y and z may be 0.2.

The metal may be selected from Al, Mg, Ti, Zr, or a combination thereof.

The positive active material precursor may have tap density from about 2.2 to about 2.5g/cm³.

The positive active material precursor may be prepared by reacting a nickel salt, a manganese salt, a cobalt salt, a metal salt, a complexing agent and a pH controlling agent, or reacting a nickel salt, a manganese salt, a cobalt salt, a complexing agent and a pH controlling agent, while a pH of about 11.2 to about 11.8 is maintained.

According to a second aspect of the present invention, provided is a positive active material prepared from the positive active material precursor of the invention in its first aspect.

The positive active material may be a compound represented by the following Chemical Formula 2.

LiₐNiₓCo_{y}Mn_{z}MₖO₂ [Chemical Formula 2]

In Chemical Formula 2, M is a metal, 0.9≤a≤1.2, , 0.45≤x≤0.65, 0.15≤y≤0.25, 0.15≤z≤0.35, 0≤k≤0.1, x+y+z+k=1, and a ratio of a : (x+y+z+k) ranges from about 0.9:1 to about 1.2:1.

A ratio of a : (x+y+z+k) may be from about 0.97:1 to 1.05:1.

The positive active material may have an a-axis lattice constant of more than or equal to about 2.8651Å and a c-axis lattice constant of more than or equal to about 14.20691Å.

According to a third aspect of the present invention, a secondary lithium battery is provided that includes a negative electrode, a positive electrode, and an electrolyte. The positive electrode includes the positive active material of the invention in its second aspect.

Accordingly, the positive active material precursor may provide a positive active material that has improved electrical conductivity and high rate capability as well as being economical and having stability and high capacity.

A more complete appreciation of the present invention, and many of the attendant advantages thereof, will be readily apparent as the same becomes better understood by reference to the following detailed description when considered in conjunction with the accompanying drawings, wherein:
Figure 1 is a schematic view of a secondary lithium battery according to an embodiment.
Figure 2 shows an X-ray diffraction analysis result of the positive active material precursor according to Example 1.
Figure 3 shows an X-ray diffraction analysis result of the positive active material precursor according to Comparative Example 1.
Figure 4 shows an X-ray diffraction analysis result of the positive active material precursor according to Comparative Example 2.

According to the first aspect, provided is a positive active material precursor for a secondary lithium battery, which is represented by the following Chemical Formula 1 and has a intensity ratio I₁₀₀/I₀₀₁ of about 0.2 or more of the height I₁₀₀ of a (100) plane peak to the height I₀₀₁ of a (001) plane peak according to X-ray diffraction analysis, a W₁₀₀/W₀₀₁ ratio of less than about 2 of the full width at half maximum W₁₀₀ of a (100) plane peak to the full width at half maximum W₀₀₁ of a (001) plane peak according to X-ray diffraction analysis, and an S₁₀₀/S₀₀₁ ratio of about 0.265 or less of the area S₁₀₀ of a (100) plane peak to the area S₀₀₁ of a (001) plane peak according to X-ray diffraction analysis.

NiₓCo_{y}Mn_{z}Mₖ (OH)₂ [Chemical Formula 1]

In Chemical Formula 1, M is a metal, 0.45≤x≤0.65, 0.15≤y≤0.25, 0.15≤z≤0.35, 0≤k≤0.1, and x+y+z+k=1.

The positive active material precursor may have an intensity ratio I₁₀₀/I₀₀₁ of less than about 1 of the height I₁₀₀ of a (100) plane peak to the height I₀₀₁ of a (001) plane peak according to X-ray diffraction analysis, a W₁₀₀/W₀₀₁ ratio from about 0.12 to about 0.8 of the full width at half maximum W₁₀₀ of a (100) plane peak to the full width at half maximum W₀₀₁ of a (001) plane peak according to X-ray diffraction analysis, and an S₁₀₀/S₀₀₁ ratio from about 0.235 to about 0.260 of the area S₁₀₀ of a (100) plane peak to the area S₀₀₁ of a (001) plane peak according to X-ray diffraction analysis.

The positive active material precursor may have a intensity ratio I₁₀₀/I₀₀₁ from about 0.2 to about 0.6 of a (100) plane peak to a (001) plane peak according to X-ray diffraction analysis, a W_{100/}W₀₀₁ ratio of less from about 0.12 to about 0.8 of the full width at half maximum W₁₀₀ of a (100) plane peak to the full width at half maximum W₀₀₁ of a (001) plane peak according to X-ray diffraction analysis, and an S₁₀₀/S₀₀₁ ratio from about 0.235 to about 0.260 of the area S₁₀₀ of a (100) plane peak to the area S₀₀₁ of a (001) plane peak according to X-ray diffraction analysis.

The positive active material precursor having the aforementioned peak intensity ratio, the ratio of full width at half maximum, and the peak area ratio of a (100) plane to a (001) plane was hardly observed to have an amorphous phase but had a crystalline phase. Accordingly, it may provide a positive active material having excellent initial efficiency, capacity, and rate capability (1C/0.1C).

In this specification, X-ray diffraction analysis is performed using a Cu Kα ray as a light source at a diffraction angle 2θ from about 15° to about 90° at a scan speed of about 0.02°/step to examine a positive active material precursor powder sample.

The positive active material precursor may have an intensity ratio I_{(002,101)}/I₀₀₁ of more than or equal to about 0.4 of a (002) plane peak or a (101) plane peak to a (001) plane peak according to X-ray diffraction analysis, and a W_{(002,10)}/W₀₀₁ ratio of less than or equal to about 2.5 of the full width at half maximum of (002) or (101) plane peaks to the full width at half maximum of a (001) plane peak according to X-ray diffraction analysis, a S₍₀₀₂, ₁₀₁/S₀₀₁ ratio of more than 0.95 between the area of a (002) plane peak or a (101) plane peak and the area S₀₀₁ of a (001) plane peak according to X-ray diffraction analysis. Since the (002) and (101) planes have a peak that is almost overlapped, W_{(002, 101)} indicates the bigger peak area of the two peaks.

The positive active material precursor may have an intensity ratio I₍₀₀₂, ₁₀₁₎/I₀₀₁ from about 0.45 to about 0.6 of a (002) plane peak or a (101) plane peak to a (001) plane peak, and a W_{(002, 101)}/W₀₀₁ ratio from about 1 to about 2.3 of the full width at half maximum of a (002) plane peak or a (101) plane peak to the full width at half maximum of a (001) plane peak, a S(_{002,101})/S₀₀₁ ratio from 0.95 to 1.072 between the area of a (002) plane peak or a (101) plane peak and the area S₀₀₁ of a (001) plane peak according to X-ray diffraction analysis.

When a positive active material precursor has a peak intensity ratio, a ratio of full width at half maximum, and a peak area in the aforementioned range, it has excellent orientation.

This positive active material precursor is highly crystalline, highly anisotropic, and has a single phase with no impurities.

In Chemical Formula 1, 0.55≤x≤0.65, 0.15≤y≤0.25, 0.15≤z≤0.25, 0≤k≤0.1, and x+v+z+k=1. x:y:z may be 6:2:2. When x, y, z, and k are within these ranges, it may provide a positive active material that may improve battery characteristics such as cell capacity, voltage retention rate, cycle characteristic, and the like.

In particular, y and z may be the same, i.e. Co and Mn may have the same mole ratio. When a positive active material precursor has this composition, it may provide a positive active material that may improve capacity, cycle-life, stability, and the like of a battery.

The metal may be selected from Al, Mg, Ti, Zr, or a combination thereof. These metals may be substituted for a part of Li, Ni, Co, and Mn, and may provide a positive active material that may improve high rate capability and initial capacity of a secondary lithium battery.

The positive active material precursor may have tap density from about 2.2 to about 2.5 g/cm³. When it has tap density within this range, it may increase capacity per battery volume.

Hereinafter, a method of manufacturing the positive active material precursor is described.

A positive active material precursor of the above Chemical Formula 1 is prepared by putting a nickel salt, a manganese salt, a cobalt salt, a metal salt, a complexing agent, and a pH controlling agent in a reactor as an aqueous solution or putting a nickel salt, a manganese salt, a cobalt salt, a complexing agent, and a pH controlling agent in a reactor as an aqueous solution, and reacting them.

The nickel salt may include nickel sulfate, nickel hydroxide, nickel nitrate, nickel acetate, hydrates thereof, and the like. The manganese salt may include manganese sulfate, manganese acetate, hydrates thereof, and the like. The Co salt may include cobalt sulfate, cobalt nitrate, cobalt carbonate, hydrates thereof, and the like. The metal salt may have a salt selected depending on kinds of a metal, for example, an aluminum salt may include aluminum nitrate or aluminum sulfate, and a magnesium salt may include magnesium nitrate or magnesium sulfate.

Herein, the reactor may be suitably maintained at a temperature from about 35 to about 45°C, and the reaction may be suitably performed for more than or equal to about 36 hours. When the reactor maintains the above conditions, a positive active material precursor may have a uniform composition.

The reactor preferably maintains pH from about 11.2 to about 11.8. When it is maintained within this pH range, a positive active material precursor may have a peak intensity ratio within a desired range according to X-ray diffraction analysis.

The complexing agent may include ammonia water, NH₄HCO₃, and the like. The pH controlling agent may include NaOH, Na₂CO₃, and the like.

In addition, nickel, manganese, cobalt, a metal provided as a nickel salt, a manganese salt, a cobalt salt, and a metal salt may be included in an amount from about 1.5 to about 3M, respectively. The total amount of nickel, manganese, cobalt, and metal provided as nickel salt, manganese salt, cobalt salt, and metal salt and the complexing agent may have a mole ratio from about 1: 0.5 to about 1.5. The reactants in the reactor may be agitated at a speed from about 600 to about 999 rpm. They may be agitated at a speed from about 600 to about 900 rpm. The resulting material may be dried at 120°C for more than 24 hours, preparing a positive active material precursor.

According to the second aspect, provided is a positive active material prepared using the positive active material precursor. First of all, the positive active material precursor is mixed with a lithium salt. The mixture is heat-treated, preparing a positive active material. The lithium salt may include lithium carbonate, lithium nitrate, lithium acetate, lithium hydroxide, hydrates thereof, lithium oxide, or a mixture thereof, but is not limited thereto.

The heat treatment may be performed at a temperature from about more than about 800°C and less than about 900°C, or from about 850 to about 890°C. The heat treatment may be performed for more than or equal to 10 hours. This temperature range is lower than common firing temperature range. When it is fired within this range, the positive active material precursor may have an optimal particle shape and may maximize capacity of a battery.

The positive active material may be a compound represented by the following Chemical Formula 2.

LiₐNiₐCo_{y}Mn_{z}MₖO₂ [Chemical Formula 2]

In Chemical Formula 2, M is a metal, 0.9≤a≤1.2, 0.45≤x≤0.65, 0.15≤y≤0.25, 0.15≤z≤0.35, 0≤k≤0.1, x+y+z+k=1, and a ratio of a : (x+y+z+k) ranges from 0.9:1 to 1.2:1.

A ratio of a : (x+y+z+k) may be from about 0.97:1 to 1.05:1. When the positive active material has this composition, it may improve capacity, cycle-life, stability, and the like of a battery.

The positive active material may have an a-axis lattice constant of more than or equal to about 2.8651Å and a c-axis lattice constant of more than or equal to about 14.20691Å. When the lattice constant belongs within this range, ions may easily move. However, preferably the a-axis lattice constant may hardly be bigger than about 2.91Å, while the C-axis lattice constant may hardly be bigger than about 14.251Å.

According to the third aspect, provided is a secondary lithium battery including a positive electrode, a negative electrode, and an electrolyte. The positive electrode includes a current collector and a positive active material layer disposed on the current collector. The positive active material layer includes the positive active material described above.

The positive active material layer may include a binder and a conductive material.

The binder improves binding properties of the positive active material particles to each other and to a current collector. Examples of the binder include at least one selected from the group consisting of polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, styrene-butadiene rubber, acrylated styrene-butadiene rubber, an epoxy resin, nylon, and the like, but is not limited thereto.

The conductive material improves electrical conductivity of a negative electrode. Any electrically conductive material may be used as a conductive agent, unless it causes a chemical change. Examples of the conductive material include carbon-based materials such as natural graphite, artificial graphite, carbon black, acetylene black, ketjen black, carbon fiber, and the like; metal-based materials such as a metal powder, a metal fiber, or the like, which includes copper, nickel, aluminum, silver, and the like; a conductive polymer such as a polyphenylene derivative; or a mixture thereof.

The current collector may be Al, but is not limited thereto.

The negative electrode includes a current collector and a negative active material layer disposed thereon. The negative active material layer includes a negative active material.

The negative active material includes a material that reversibly intercalates/deintercalates lithium ions, a lithium metal, a lithium metal alloy, a material being capable of doping lithium, or a transition metal oxide.

The material that may reversibly intercalate/deintercalate lithium ions includes a carbon material. The carbon material may be any carbon-based negative active material generally used in a lithium ion secondary battery. Examples of the carbon material include crystalline carbon, amorphous carbon, and mixtures thereof. The crystalline carbon may be shapeless, or sheet, flake, spherical, or fiber-shaped natural graphite or artificial graphite. The amorphous carbon may be a soft carbon, a hard carbon, mesophase pitch carbide, fired coke, and the like.

Examples of the lithium metal alloy include lithium and a metal selected from the group consisting of Na, K, Rb, Cs, Fr, Be, Mg, Ca, Sr, Si, Sb, Pb, In, Zn, Ba, Ra, Ge, Al, and Sn.

Examples of the material being capable of doping lithium include Si, SiOₓ (0 < x < 2), a Si-Y alloy (where Y is an element selected from the group consisting of an alkali metal, an alkaline-earth metal, a group 13 element, a group 14 element, a transition element, a rare earth element, and combinations thereof, and is not Si), Sn, SnO₂, a Sn-Y alloy (where Y is an element selected from the group consisting of an alkali metal, an alkaline-earth metal, a group 13 element, a group 14 element, a transition element, a rare earth element, and combinations thereof, and is not Sn), or mixtures thereof. At least one of these materials may be mixed with SiO₂. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof.

Examples of the transition metal oxide include vanadium oxide, lithium vanadium oxide, and the like.

The negative active material layer includes a binder, and optionally a conductive material.

The binder improves binding properties of negative active material particles with one another and with a current collector. Examples of the binder include polyvinyl alcohol, carboxylmethyl cellulose, hydroxypropyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material may be any conductive material that is generally used for a secondary lithium battery. Examples of the conductive material include a carbon-based material such as natural graphite, artificial graphite, carbon black, acetylene black, ketjen black, carbon fiber, and the like; a metal-based material including a metal powder or a metal fiber including copper, nickel, aluminum, silver, and the like; a conductive polymer such as polyphenylene derivative, and the like; or a mixture thereof.

The current collector includes a copper foil, a nickel foil, a stainless steel foil, a titanium foil, a nickel foam, a copper foam, a polymer substrate coated with a conductive metal, or combinations thereof.

The negative and positive electrodes may be fabricated in a method of mixing each active material, a conductive material, and a binder to prepare an active material composition and coating the composition on a current collector. The electrode-manufacturing method is well known and thus is not described in detail in the present specification. The solvent includes N-methylpyrrolidone and the like, but is not limited thereto.

The electrolyte may include a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent. Examples of the carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. Examples of the ester-based solvent may include methyl acetate, ethyl acetate, n-propyl acetate, dimethyl acetate, methylpropionate, ethylpropionate, γ-butyrolactone, decanolide, valerolactone, mevalonolactone, caprolactone, and the like. Examples of the ether-based solvent include dibutyl ether, tetraglyme, diglyme, dimethoxyethane, 2-methyltetrahydrofuran, tetrahydrofuran, and the like. Examples of the ketone-based solvent include cyclohexanone and the like. Examples of the alcohol-based solvent include ethyl alcohol, isopropyl alcohol, and the like. Examples of the aprotic solvent include nitriles such as R-CN (where R is a C₂ to C₂₀ linear, branched, or cyclic hydrocarbon, a double bond, an aromatic ring, or an ether bond), amides such as dimethylformamide, dioxolanes such as 1,3-dioxolane, sulfolanes, and the like.

The non-aqueous organic solvent may be used singularly or in a mixture. When the organic solvent is used in a mixture, the mixture ratio may be controlled in accordance with a desirable battery performance.

The carbonate-based solvent may include a mixture of a cyclic carbonate and a linear carbonate. The cyclic carbonate and the chain carbonate are mixed together in a volume ratio from about 1:1 to about 1:9. When the mixture is used as the non-aqueous organic solvent, the electrolyte may have enhanced performance.

In addition, the non-aqueous organic solvent may further include the mixture of a carbonate-based solvent and an aromatic hydrocarbon-based solvent. The carbonate-based solvent and the aromatic hydrocarbon-based solvent may be mixed together in a volume ratio from about 1:1 to about 30:1.

The aromatic hydrocarbon-based organic solvent may be represented by the following Chemical Formula 3.

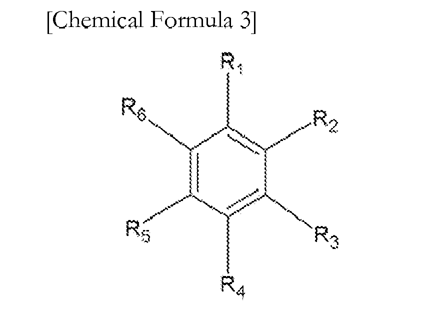

In Chemical Formula 3, R₁ to R₆ are independently selected from the group consisting of hydrogen, a halogen, a C1 to C10 alkyl group, a C1 to C10 haloalkyl group, and a combination thereof.

The aromatic hydrocarbon-based organic solvent may include, but is not limited to, at least one selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 1,2-difluorotoluene, 1,3-difluorotoluene, 1,4-difluorotoluene, 1,2,3-trifluorotoluene, 1,2,4-trifluorotoluene, chloro toluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodotoluene, 1,2,4-triiodotoluene, xylene, and a combination thereof.

The non-aqueous electrolyte may further include vinylene carbonate, an ethylene carbonate-based compound of the following Chemical Formula 4, or a combination thereof in order to improve the cycle life of a battery.

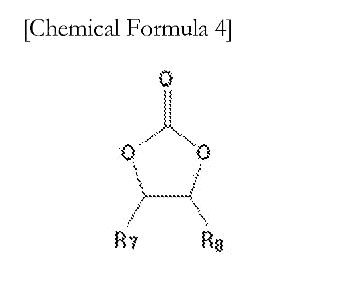

In Chemical Formula 4, R₇ and R₈ are independently selected from the group consisting of hydrogen, a halogen, a cyano group (CN), a nitro group (NO₂), and a C1 to C5 fluoroalkyl group, provided that at least either of R₇ and R₈ is selected from the group consisting of a halogen, a cyano group (CN), a nitro group (NO₂), and a C1 to C5 fluoroalkyl group.

Examples of the ethylene carbonate-based compound include difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and the like. The amount of the additive for improving cycle life may be adjusted within an appropriate range.

The lithium salt is dissolved in an organic solvent, supplies lithium ions in the battery, operates basic operation of a secondary lithium battery, and improves lithium ion transportation between positive and negative electrodes. Non-limiting examples of the lithium salt include at least one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CxF₂ₓ₊₁SO₂)(C_{y}F_{2y+1}SO₂) (where x and y are natural numbers), LiCl, LiI, and LiB(C₂O₄)₂ (lithium bisoxalato borate, LiBOB). The lithium salt may be used in a concentration from about 0.1 M to about 2.0 M. When the lithium salt is included in the above concentration range, electrolyte performance and lithium ion mobility may be enhanced due to optimal electrolyte conductivity and viscosity.

The secondary lithium battery may further include a separator between the negative and positive electrodes, as needed. Non-limiting examples of a suitable separator include polyethylene, polypropylene, polyvinylidene fluoride, and multi-layers thereof, such as a polyethylene/polypropylene double-layered separator, a polyethylene/polypropylene/polyethylene triple-layered separator, and a polypropylene/polyethylene/polypropylene triple-layered separator.

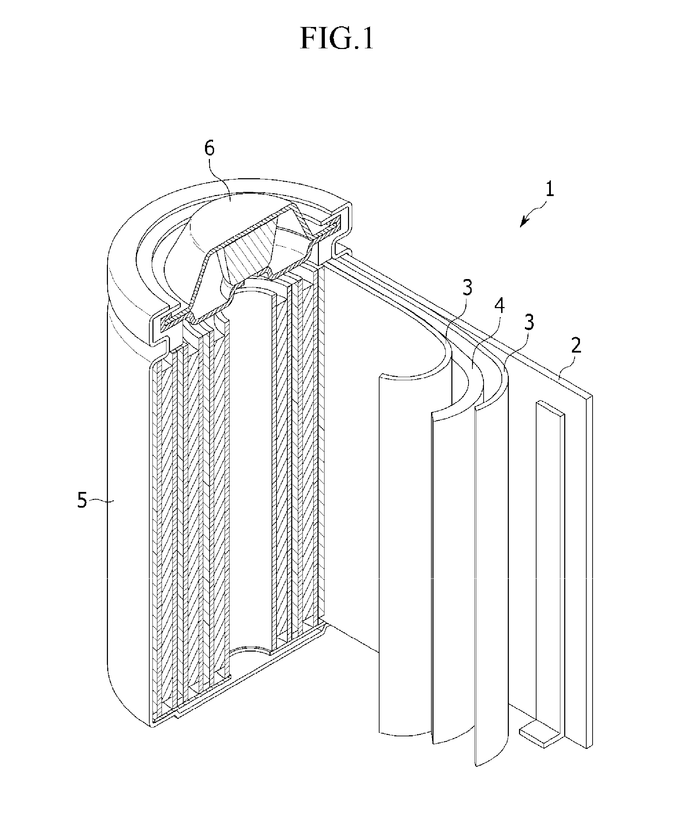

Figure 1 is a schematic view showing the representative structure of a secondary lithium battery according to an embodiment. As shown in Figure 1, the secondary lithium battery 1 includes a battery case 5 containing a positive electrode 4, a negative electrode 2, and a separator 3 interposed between the positive electrode 4 and the negative electrode 2, an electrolyte solution impregnated therein, and a sealing member 6 sealing the battery case 5.

The following examples illustrate the invention in more detail.

### Example 1: Preparation of a positive active material precursor

NiSO₄, CoSO₄, and MnSO₄ were put in a co-precipitation reactor to have a Ni:Co:Mn mole ratio of 6:2:2. Next, an ammonia aqueous solution was added thereto to have a (Ni+Co+Mn) : ammonia mole ratio of 1:1. Then, 6M of NaOH was added thereto. The mixture was reacted in series.

The co-precipitation reaction was maintained to have pH from about 11.2 to 11.8 and performed for 36 hours at 40°C at an agitation speed of 600 rpm.

### Comparative Example 1: Positive active material precursor

Ni_{0.5}Co_{0.2}Mn_{0.3} (OH)₂ made by Jinhe Co., Ltd. was used.

### Comparative Example 2: Positive active material precursor

Nickel cobalt manganese hydroxide (KTH-NE) made by Tanaka Co., Ltd. was used.

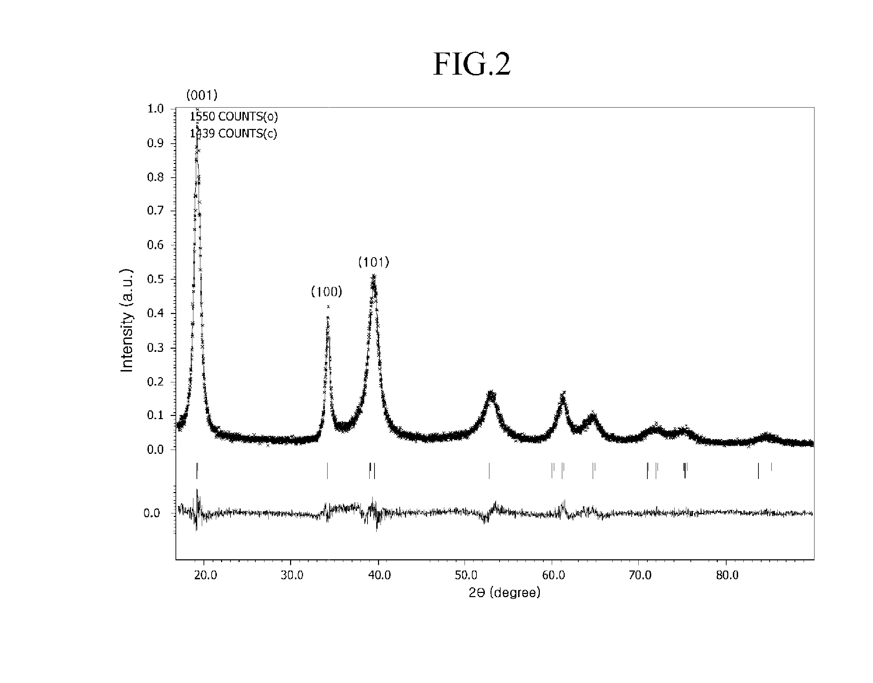

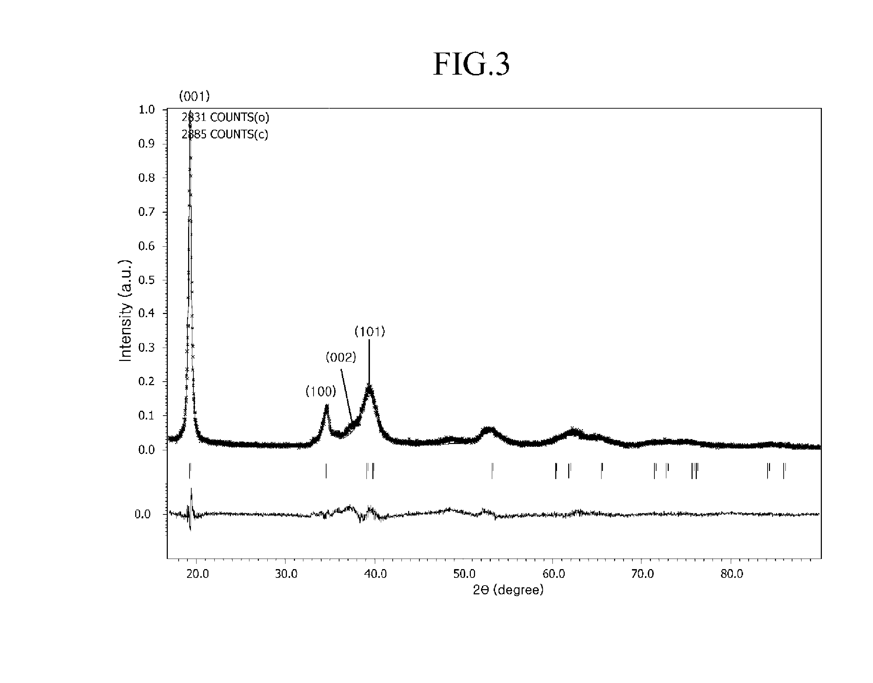

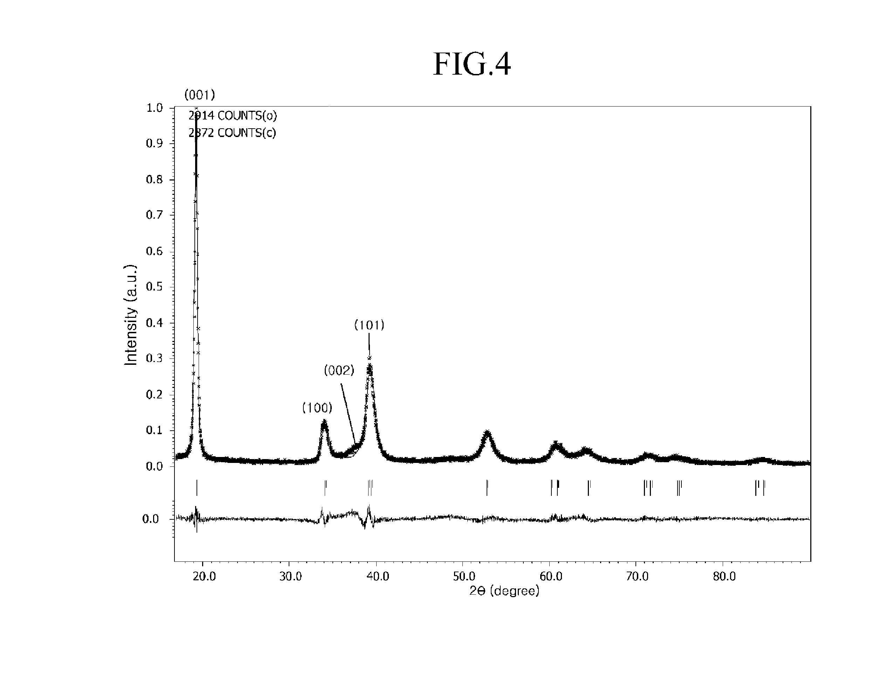

The positive active material precursors according to Example 1 and Comparative Examples 1 and 2 underwent X-ray diffraction analysis. The results are respectively provided in Figures 2 to 4. The X-ray diffraction analysis used a Cu Kα-ray as an X-ray diffraction light source at a diffraction angle (2θ) from about 15° to about 90° at a scan rate of 0.02°/step.

The X-ray diffraction analysis results are provided in the following Table 1.

**Table 1**

| | 20 (degree) | Crystal plane | Full width at half maximum (FWHM, degree) | Peak intensity ratio | FWHM ratio | Area ratio |
|---|---|---|---|---|---|---|
| Comparative Example 1 | 19.184 | 001 | 0.3581 | 1 | 1 | 1 |
| | 34.429 | 100 | 0.8480 | 0.12 | 2.37 | 0.284 |
| | 38.933 | 002 | 1.8622 | 0.18 | 5.20 | 0.936 |
| | 39.709 | 101 | 1.5816 | 0.18 | 4.41 | |
| Comparative Example 2 | 19.207 | 001 | 0.3225 | 1 | 1 | 1 |
| | 33.974 | 100 | 0.7953 | 0.11 | 2.47 | 0.271 |
| | 38.996 | 002 | 0.9825 | 0.27 | 3.05 | 0.878 |
| | 39.323 | 101 | 1.0482 | 0.27 | 3.25 | |
| Example 1 | 19.180 | 001 | 0.7982 | 1 | 1 | 1 |
| | 34.141 | 100 | 0.5411 | 0.38 | 0.68 | 0.248 |
| | 38.925 | 002 | 1.6829 | 0.5 | 2.10 | 1.054 |
| | 39.452 | 101 | 1.2348 | | 1.54 | |

As shown in Table 1, the positive active material precursor of Comparative Examples 1 and 2 included additional impurities at an angle from about 36 to 37.5°. However, the positive active material precursor of Example 1 had high single-phased crystallinity. Accordingly, a positive active material precursor having peak intensity ratio, a ratio of full width at half maximum, and peak area ratio according to the invention may provide a positive active material having excellent initial efficiency, capacity, and rate capability (1C/0.1C).

### Example 2: Preparation of a positive active material

The positive active material precursor of Example 1 was cleaned and dried in a 120°C oven. Then, Li₂CO₃ was added to the dried positive active material precursor to have a Li/metal (Ni+Co+Mn) ratio of 1.03, and the resultant mixture was mixed using a handy mixer.

The mixture was heated by increasing a temperature at an increasing speed of 2°C/ min, fired at 890°C for ten hours, and cooled at a speed of 2°C/min, preparing a positive active material.

### Comparative Example 3 and 4: Preparation of a positive active material

The positive active material precursor of Comparative Examples 1 and 2 were mixed with Li₂CO₃ to have a Li/metal (Ni+Co+Mn) ratio of 1.03 using a handy mixer. The mixture was heated by increasing a temperature at an increasing speed of 2°C/min, fired at 890°C for 10 hours, and then cooled at a speed of 2°C/min, preparing a positive active material.

### Example 3: Fabrication of a battery

The positive active material of Example 2, a polyvinylidene fluoride binder, and a carbon conductive agent were dispersed in an N-methylpyrrolidone solvent in a weight ratio of 96:2:2, preparing a positive slurry. The positive slurry was coated on a 60 µm-thick aluminum film, dried at 135°C for more than or equal to 3 hours, and compressed, fabricating a positive electrode.

Using the positive electrode, a lithium metal as a counter electrode, a coin-type half cell was fabricated. In the half cell, a polyethylene separator was disposed between the positive electrode and the counter electrode, and an electrolyte solution was injected therein. The electrolyte solution was prepared by dissolving 1.5 M of LiPF₆ in a mixed solvent of ethylene carbonate (EC), ethylmethyl carbonate (EMC) and dimethyl carbonate (DMC) in a volume ratio of 2:2:6.

### Comparative Examples 5 and 6: Fabrication of a half-cell

A half-cell was fabricated according to the same method as Example 3, except for using the positive active materials of Comparative Examples 3 and 4.

While the present invention has been described in connection with certain exemplary embodiments thereof, it is to be understood that the invention is not limited to the disclosed embodiments, but, on the contrary, is intended to cover various modifications and equivalent arrangements included within the scope of the appended claims.

## Claims

1. A positive active material precursor for a secondary lithium battery, wherein the positive active material precursor is represented by the following Chemical Formula 1 and has an intensity ratio I₁₀₀/I₀₀₁ of more than or equal to about 0.2 of the height I₁₀₀ of a (100) plane peak to the height I₀₀₁ of a (001) plane peak according to X-ray diffraction analysis, a W₁₀₀/W₀₀₁ ratio of less than about 2 of a full width at half maximum W₁₀₀ of a (100) plane peak to a full width at half maximum W₀₀₁ of a (001) plane peak according to X-ray diffraction analysis, and an S₁₀₀/S₀₀₁ ratio of less than or equal to about 0.265 of the area S₁₀₀ of a (100) plane peak to the area S₀₀₁ of a (001) plane peak according to X-ray diffraction analysis:
NiₓCo_{y}Mn_{z}Mₖ (OH)₂ [Chemical Formula 1]
wherein, in Chemical Formula 1, M is a metal, 0.45≤x≤0.65, 0.15≤y≤0.25, 0.15≤z≤0.35, 0≤k≤0.1, and x+v+z+k=1.

2. The positive active material precursor of claim 1, wherein the positive active material precursor has an intensity ratio I₁₀₀/I₀₀₁ of less than 1 of the height I₁₀₀ of a (100) plane peak to the height I₀₀₁ of a (001) plane peak according to X-ray diffraction analysis, a W₁₀₀/W₀₀₁ ratio from 0.12 to 0.8 of the full width at half maximum W₁₀₀ of a (100) plane peak to the full width at half maximum W₀₀₁ of a (001) plane peak according to X-ray diffraction analysis, and an S₁₀₀/S₀₀₁ ratio from 0.235 to 0.260 of the area S₁₀₀ of a (100) plane peak to the area S₀₀₁ of a (001) plane peak according to X-ray diffraction analysis.

3. The positive active material precursor of claim 1 or claim 2, wherein the positive active material precursor has a intensity ratio I₁₀₀/I₀₀₁ from 0.2 to 0.6 of the height I₁₀₀ of a (100) plane peak to the height I₀₀₁ of a (001) plane peak according to X-ray diffraction analysis, a W₁₀₀/W₀₀₁ ratio from 0.12 to 0.8 of the full width at half maximum W₁₀₀ of a (100) plane peak to the full width at half maximum W₀₀₁ of a (001) plane peak according to X-ray diffraction analysis, and an S_{100/}S₀₀₁ ratio from t 0.235 to 0.260 of the area S₁₀₀ of a (100) plane peak to the area S₀₀₁ of a (001) plane peak according to X-ray diffraction analysis.

4. The positive active material precursor of any preceding claim, wherein the positive active material precursor has an intensity ratio I_{(002, 101)}/I₀₀₁ of more than or equal to 0.4 of a (002) plane peak or a (101) plane peak to a (001) plane peak according to X-ray diffraction analysis, and a W_{(002, 101)}/W₀₀₁ ratio of less than or equal to 2.5 of the full width at half maximum of a (002) plane peak or a (101) plane peak to the full width at half maximum of a (001) plane peak according to X-ray diffraction analysis, and a S_{(002, 101)}/S₀₀₁ ratio of more than 0.95 between the area of a (002) plane peak or a (101) plane peak and the area S₀₀₁, of a (001) plane peak according to X-ray diffraction analysis.

5. The positive active material precursor of any preceding claim, wherein the positive active material precursor has an intensity ratio 1_{(002, 101)}/I₀₀₁ from 0.45 to 0.6 of a (002) plane peak or a (101) plane peak to a (001) plane peak according to X-ray diffraction analysis, a W_{(002, 101)}/W₀₀₁ ratio from 1 to 2.3 of the full width at half maximum of a (002) plane peak or a (101) plane peak to the full width at half maximum of a (001) plane peak according to X-ray diffraction analysis, and a S_{(002, 101)}/S₀₀₁ ratio from 0.95 to 1.072 between the area of a (002) plane peak or a (101) plane peak and the area S₀₀₁ of a (001) plane peak according to X-ray diffraction analysis.

6. The positive active material precursor of any preceding claim, wherein the positive active material precursor is single-phased.

7. The positive active material precursor of any preceding claim, wherein in Chemical Formula 1, 0.55≤x≤0.65, 0.15≤y≤0.25, 0.15≤z≤0.25, 0≤k≤0.1, and x+y+z+k=1.

8. The positive active material precursor of any preceding claim, wherein in Chemical Formula 1, y and z are the same.

9. The positive active material precursor of any preceding claim, wherein in Chemical Formula 1, x is 0.6, and y and z are 0.2.

10. The positive active material precursor of any preceding claim, wherein the metal is selected from Al, Mg, Ti, Zr, or a combination thereof.

11. The positive active material precursor of any preceding claim, wherein the positive active material precursor is prepared by reacting a nickel salt, a manganese salt, a cobalt salt, a metal salt, a complexing agent and a pH controlling agent, or reacting a nickel salt, a manganese salt, a cobalt salt, a complexing agent and a pH controlling agent, while a pH of about 11.2 to about 11.8 is maintained.

12. A positive active material prepared from the positive active material precursor of claim 1,
wherein the positive active material is a compound represented by the following Chemical Formula 2:
LiₐNiₓCo_{y}Mn_{z}MₖO₂ [Chemical Formula 2]
wherein, in Chemical Formula 2, M is a metal, 0.9≤y≤1.2, 0.45≤x≤0.65, 0.15≤y≤0.25, 0.15≤z≤0.35, 0≤k≤0.1, x+y+z+k=1, and a : (x+y+z+k) ratio ranges from 0.9:1 to 1.2:1.

13. The positive active material of claim 12, wherein the a : (x+y+z+k) ratio ranges from 0.97:1 to 1.05:1.

14. The positive active material of claim 12 or claim 13, wherein the a-axis of the positive active material has a lattice constant of more than or equal to 2.8651Å, and the c-axis has a lattice constant of more than or equal to 14.20691Å.

15. A secondary lithium battery comprising:
a positive electrode, a negative electrode, and an electrolyte; and
the positive electrode comprising a positive active material prepared from a positive active material precursor of any of claims 1 to 11.
